# EUROPEAN PATENT APPLICATION

(11) **EP 3 419 038 A1**
(43) Date of publication of application: **26.12.2018**
(21) Application number: 18176397.0
(22) Date of filing: 07.06.2018
(51) Int. Cl.: H01H 9/30, H01H 9/54

(54) **A VOLTAGE CONTROL METHOD IN ELECTRIC VEHICLES**

(30) Priority: 21.06.2017 TR 201709266
(71) Applicant: Temsa Ulasim Araclari Sanayi ve Ticaret Anonim Sirketi, Adana (TR)
(72) Inventor: YIRIK, EMRAH, ADANA (TR); IRMAK, UMUT, ADANA (TR); UNAL, ERDEM, ADANA (TR)
(74) Representative: Dericioglu, E. Korhan

(57) **Abstract**

The invention comprises a method for high voltage control by using the high voltage relay and the solid state relay (IGBT) developed for automotive industry together in electric vehicles.

## Description

### Field of the Invention

The present invention relates to a method wherein high voltage is controlled in electric vehicles.

### Background of the Invention

Today, electric vehicles are manufactured for reducing fuel consumption, decreasing urban pollution and reducing carbon emission. The said electric vehicles run on electric energy and use the electricity they store via the batteries and other energy storing devices by using one or more electric motors.

Industrial contactors, high voltage relays and mechanical relays are used for high voltage, and voltage control is performed by turning on/off the switches.

However in the state of the art applications, the mechanical relays are mostly used in rail systems, and they are not suitable for application in automotive industry due to their size. High voltage relays experience a problem of welding during switching.

The Korean patent document no. KR101404638, an application in the state of the art, discloses solid state relays performing high voltage control in vehicles. The said invention employs a contactless electronic type solid state relay in vehicles and performs switching by using high voltage and high current. The solid state relays that receive the signal from the input terminal are mounted on the PCB (printed circuit board) and are controlled by the control unit and the gate driving unit.

The Korean patent document no. KR101294002, an application in the state of the art, discloses about plug-in type relay control employing solid state relays for high voltage control in electric vehicles. The voltage conversion unit converts low voltage to high voltage. A constant voltage is obtained by using PWM modulation. The invention performs control by using a switching solid state relay. The voltage conversion unit and the PWM driver are mounted on the printed circuit board.

The United States patent document no. US5740002, an application in the state of the art, discloses a system for high voltage control by using solid state relays in vehicles. The said invention performs solid state relay switching and is mounted on a printed circuit board. The control unit in the system controls the solid state relay and performs switching control.

### Problems Solved by the Invention

The object of the present invention is to perform voltage control by using the high voltage relay and the solid state relay (IGBT) developed for automotive industry together in electric vehicles.

### Detailed Description of the Invention

Voltage control method in electric vehicles developed to fulfill the object of the present invention is illustrated in the accompanying figure, in which;

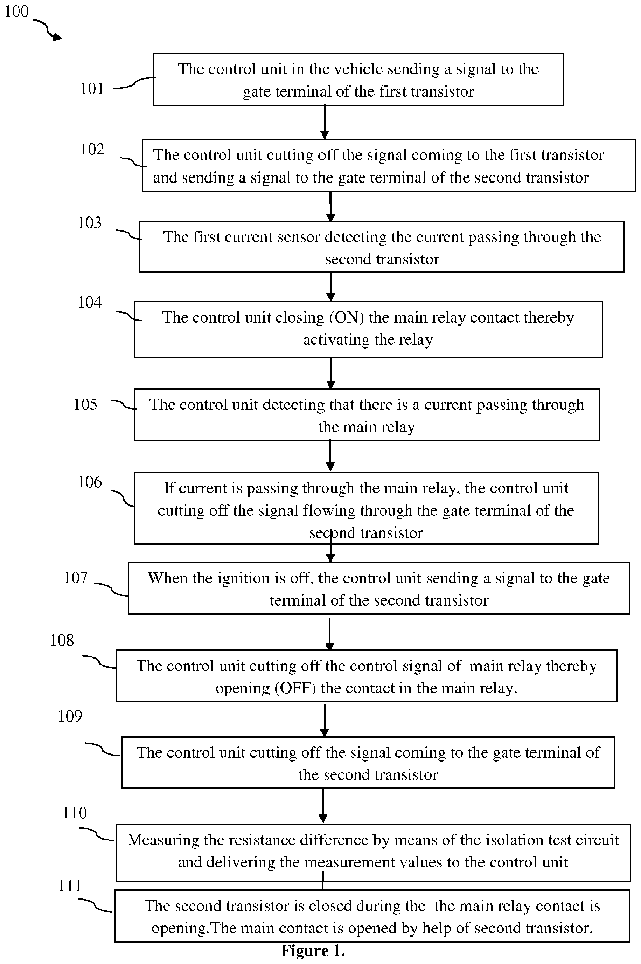

**Figure 1** is a schematic view of the Voltage Control Method in Electric Vehicles.

The components in the figures are given reference numbers as follows:
100. Voltage Control Method in Electric Vehicles
101. When the ignition switch of the electric vehicle is turned on, the control unit in the vehicle sending a signal to the gate terminal of the first transistor,
102. When the voltage passing over the resistor reaches a predetermined value, the control unit cutting off the signal coming to the first transistor and sending a signal to the gate terminal of the second transistor,
103. The first current sensor detecting the current passing through the second transistor,
104. The control unit closing (ON) the main relay contact thereby activating the relay,
105. The control unit calculating the difference between the data received from the first transistor and the second transistor, comparing it with the predetermined value and if it is the same value, detecting that there is a current passing through the main relay,
106. If current is passing through the main relay, the control unit cutting off the signal flowing through the gate terminal of the second transistor,
107. When the contact is closed, the control unit sending a signal to the gate terminal of the second transistor,
108. When the current data is received from the first current sensor, the control unit cutting off the signal passing through the main relay thereby opening (OFF) the contact in the main relay,
109. If the current data received from the contact current equals to a predetermined value, the control unit cutting off the signal coming to the gate terminal of the second transistor,
110. Measuring the resistance difference between positive high voltage and negative high voltage by means of the isolation test circuit and delivering the measurement values to the control unit,
111. If the isolation resistance difference is below a predetermined value, the second transistor helps for opening the main relay contact.

In the voltage control method in electric vehicles (100) of the present invention, when the ignition switch in electric vehicles is turned on, the control unit provided in the vehicle sends a signal to the gate terminal of the first transistor and the precharge process starts (101).

When the voltage passing through the resistor becomes stable, i.e. reaches a predetermined value, the control unit cuts off the signal coming to the first transistor and sends a signal to the gate terminal of the second transistor (102). This way, the second transistor prevents electric load discharge (electric arc) resulting from high current density.

The first current sensor in the system detects the current passing through the second transistor (103), and after the second transistor is closed and when current flow is observed in the current sensor, the control unit activates the main relay coil closing the main relay contact (104).

Whether or not current is passing through the main relay is determined upon the control unit calculating the difference of the data coming from the second current sensor and the first current sensor (105). Whether or not current is passing through the main relay is understood when, upon comparing with the predetermined value, it is found to be the same with the said value; and the control unit cuts off the signal passing through the gate terminal of the second transistor (106).

When the contact is closed, the control unit sends a signal to the gate terminal of the second transistor and the second transistor is reactivated (107). When the current data is received from the first current sensor, the control unit cuts off the signal passing through the main relay thereby opening the contact in the main relay (108).

If the current data received from the contact current equals to a predetermined value (for example, when zero data is received from the main contact current), the control unit cuts off the signal coming to the gate terminal of the second transistor (109). Thus, the second transistor is deactivated.

During opening of the main relay contact, since the second transistor is activated, possible electric arcs are limited. Thus, safe switching is ensured.

The resistance difference between positive high voltage and negative high voltage is measured by means of the isolation test circuit and the measurement values are delivered to the control unit (110). There is a first voltage sensor detecting positive voltage and a second voltage sensor detecting load voltage.

If the isolation resistance difference is below a predetermined value, the second transistor is closed during the main relay contact is opening.(111).

In one embodiment of the invention, solid state relay (IGBT) is used as the first transistor and the second transistor. By means of the solid state relay, the electric arc occurring on high voltage relays during switching is damped and thus the relays, to which the transistors are connected, are enabled to be safely opened and closed.

## Claims

1. A voltage control method in electric vehicles, essentially **comprising**
- When the ignition switch of the electric vehicle is turned on, the control unit in the vehicle sending a signal to the gate terminal of the first transistor (101),
- When the voltage passing over the resistor reaches a predetermined value, the control unit cutting off the signal coming to the first transistor and sending a signal to the gate terminal of the second transistor (102),
- The first current sensor detecting the current passing through the second transistor (103),
- The control unit closing (ON) the main relay contact thereby activating the relay(104),
- The control unit calculating the difference between the data received from the first transistor and the second transistor, comparing it with the predetermined value and if it is the same value, detecting that there is a current passing through the main relay (105),
- If current is passing through the main relay, the control unit cutting off the signal flowing through the gate terminal of the second transistor (106),
- When the contact is closed, the control unit sending a signal to the gate terminal of the second transistor (107),
- When the current data is received from the first current sensor, the control unit cutting off the signal passing through the main relay thereby opening the contact in the main relay (108),
- If the current data received from the contact current equals to a predetermined value, the control unit cutting off the signal coming to the gate terminal of the second transistor (109).

2. Voltage control method in electric vehicles (100) according to Claim 1, **comprising** the steps of measuring the resistance difference between positive high voltage and negative high voltage by means of the isolation test circuit and delivering the measurement values to the control unit (110), and if the isolation resistance difference is below a predetermined value, the second transistor is closed during the main relay contact is opening (111).

3. Voltage control method in electric vehicles (100) according to Claim 1, comprising a first transistor produced from IGBT (Insulated Gate Bipolar Transistor) solid state relay.

4. Voltage control method in electric vehicles (100) according to Claim 1, comprising a second transistor produced from IGBT (Insulated Gate Bipolar Transistor) solid state relay.

5. Voltage control method in electric vehicles (100) according to Claim 1, having ISO 26262 standard for voltage control.
